# EUROPÄISCHE PATENTANMELDUNG

(11) **EP 1 316 253 A2**
(43) Veröffentlichungstag der Anmeldung: **04.06.2003**
(21) Anmeldenummer: 02026574.0
(22) Anmeldetag: 28.11.2002
(51) Int. Cl.: A01K 1/00, A01K 1/12, A01K 9/00

(54) **Verfahren und Vorrichtung zur Milchviehhaltung**

(30) Priorität: 30.11.2001 DE 10158979
(71) Anmelder: Westfalia Landtechnik GmbH, 59302 Oelde (DE)
(72) Erfinder: Dreyer, Herbert, 21702 Ahlerstedt (DE); Stoltenberg, Hugo, 24619 Rendswühren (DE); Harms, Jelto, 26670 Uplengen (DE); Petersen, Uwe, 24576 Bimöhlen (DE)
(74) Vertreter: Neumann, Ditmar

(57) **Zusammenfassung**

Der Gegenstand der Erfindung betrifft ein Verfahren zur Milchviehhaltung bei dem milchgebende Tiere in einem Tierhaltebereich (1) mit wenigstens einem Aufenthaltsbereich (2) und mit mindestens einem Melkbereich (3) gehalten werden, bei dem Jungtiere in einem Jungtierbereich (5) gehalten werden, wobei der strukturelle Aufbau des Jungtierbereichs (5) im wesentlichen dem Aufbau des Tierhaltebereichs (1) der milchgebenden Tiere entspricht, und die Jungtiere nach erreichen der Melkreife in den Tierhaltebereich (1) für milchgebende Tiere überführt werden.

## Beschreibung

Der Gegenstand der Patentanmeldung bezieht sich auf ein Verfahren und auf eine Vorrichtung zur Milchviehhaltung. Obwohl die Erfindung im folgenden mit bezug auf Kühe beschrieben wird, ist der Einsatz nicht auf Kühe beschränkt. Es ist ebenso möglich, die Erfindung bei der Viehhaltung anderer milchabgebender Säugetiere, also beispielsweise bei Stuten, Eseln, Schafen, Ziegen, Elchen, Lamas, Dromedaren, Kamelen, Büffeln, Elchen und Rentieren einzusetzen.

Milchabgebende Kühe werden in der Regel in einem Tierhaltebereich gehalten. Jungtiere werden meist in einem Jungtierbereich gehalten. Jungtiere sind junge Rinder vor dem ersten Kalben, die noch keine Milch abgeben. In den ersten Lebensmonaten bezeichnet man sie als Kälber. Jungtiere, die tragend sind, werden Färsen genannt.

Ein Jungtierbereich weist meist eine Station auf, in der eine Fütterung mit Tränk- und/oder Futterautomaten erfolgt. Das Betreten einer solchen Station erfolgt derart, dass das Tier vorwärts in die als Box ausgebildete Station geht, dort sein Futter beispielsweise an einem Tränkenuckel oder Futterschale aufnehmen kann und die Box nach Belieben, wenn beispielsweise kein Verlangen mehr besteht oder die Tränke oder Futteraufnahme beendet ist, diese Box rückwärts wieder verlassen kann.

Eine solche Box ist so ausgebildet, dass sie an der Frontseite entsprechende Fütterungsvorrichtungen aufweist, an den beiden Längsseiten geschlossen und an der Eingangsseite offen ist, so dass das Tier vorwärts hinein- und rückwärts hinausgehen kann.

Eine solche Station ist für ein Jungtier frei zugänglich. Sie ist freistehend in einem Raum aufgestellt, so dass das Jungtier nach Verlassen der Station in denselben Stallbereich zurückkehrt, aus dem es gekommen ist. Dabei ist es möglich, diesen Stallbereich als einen nicht aufgeteilten Stallbereich zu gestalten, in dem das Jungtier die Möglichkeit zum Ruhen hat. An weiteren Stellen bzw. Teilorten des Stallbereichs kann es anderes Futter, wie beispielsweise Grund- oder Rauhfutter oder Wasser aufnehmen. Im Normalfall ist der Jungtierbereich für eine Vielzahl von Jungtieren vorgesehen.

Es ist auch üblich, die Stallbereiche Ruhen und Fressen voneinander derart zu trennen, dass durch frei zugängliche Übergänge die Jungtiere zwischen diesen räumlich halb oder vollständig getrennten Bereichen frei wechseln können um jeweils ihrem Bedürfnis nachzugehen. Derartigen Stationen können sowohl in einem Freß- als auch in einem Ruhebereich angeordnet sein.

Durch die WO 94/09616 ist ein Verfahren zur Milchviehhaltung bekannt geworden, bei dem milchgebende Tiere in einem Tierhaltebereich mit wenigstens einem Aufenthaltsbereich und mit mindestens einem Melkbereich gehalten werden.

Hiervon ausgehend liegt der vorliegenden Erfindung die Zielsetzung zugrunde, ein Verfahren und eine Vorrichtung zur Milchviehhaltung anzugeben, durch das bzw. durch die die Leistungsfähigkeit der milchgebenden Tiere erhöht werden kann.

Diese Zielsetzung wird erfindungsgemäß durch ein Verfahren mit den Merkmalen des Anspruchs 1 bzw. durch eine Vorrichtung mit den Merkmalen des Anspruchs 6 erreicht. Vorteilhafte Weiterbildungen und Ausgestaltungen des Verfahrens bzw. der Vorrichtung sind Gegenstand der jeweiligen abhängigen Patentansprüche.

Erfindungsgemäß werden die Jungtiere an einen bestimmten Ablauf gewöhnt. Dies kann schon in einem frühen Entwicklungszeitraum der Tiere geschehen, in welchem die Prägung zu relativ stabilen Ergebnissen führt. In der frühen Entwicklung führt der Lemvorgang, im Vergleich zu späteren Lernprozessen oft zu stabileren Ergebnissen. Aber auch zu einem späteren Zeitpunkt kann eine effektive Prägung des Verhaltens bzw. ein Gewöhnen auf der Lernstrecke erfolgen. Dies macht sich die Erfindung zunutze, indem die Jungtiere in einem Jungtierbereich gehalten werden, wobei der strukturelle Aufbau des Jungtierbereichs im wesentlichen dem Aufbau des Tierhaltebereichs der milchgebenden Tiere entspricht. Nach Erreichen der Melkreife werden die Jungtiere in den Tierhaltebereich für milchgebende Tiere geführt.

Durch diese Verfahrensführung werden die Jungtiere auf einen bestimmten Ablauf geprägt, der auch später noch stattfindet, wenn die Jungtiere die Melkreife erreicht haben und in einem Tierhaltebereich als milchgebende Tiere gehalten werden. Der Tierhaltebereich weist wenigstens einen Aufenthaltsbereich und wenigstens einen Melkbereich auf. Dies hat den Vorteil, dass eine Änderung des Verhaltensmusters nach Überführung in den Tierhaltebereich für milchgebende Tiere nicht erforderlich ist.

Im Stand der Technik ist hingegen eine Änderung des Verhaltensmusters erforderlich, da sich Jungtierbereich und Tierhaltebereich für milchabgebende Tiere wesentlich unterscheiden. Erfindungsgemäß ist eine Korrektur des durch Prägung erlernten Verhaltensmusters nicht erforderlich. Eine solche Korrektur, ist mit einem nicht unerheblichen Zeitaufwand und Streß für das Tier verbunden. Es ist nicht ausgeschlossen, dass eine Korrektur nicht vollständig erreicht wird, so dass die maximale Leistung des zu melkenden Tieres nicht erzielt wird.

Außerdem kann ein z.B. gestresstes Tier, welches sich an die neue Situation im Tierhaltebereich für milchabgebende Tiere noch nicht gewöhnt hat, auch die anderen Tiere erheblich behindern, indem es den Ein- oder Ausgang zu einer Melk- oder Futterbox oder dergleichen blockiert. Dadurch kann die Milchleistung der gesamten Herde abnehmen. Derartige Situationen werden erfindungsgemäß vermindert.

Die Erfindung kann in jedem Lebensalter des Jungtieres Verwendung finden. In den ersten Lebenstagen oder Lebensmonaten ist eine starke Prägung zu erwarten. Allerdings kann auch eine Prägung zu einem späteren Zeitpunkt ausreichend sein. Besonders junge Kälber sind körperlich erheblich kleiner als ältere oder tragende Jungtiere. Deshalb kann der Jungtierbereich an die Tiergröße angepasst sein. Möglich ist es auch, zwei oder mehr unterschiedliche Jungtierbereiche vorzusehen, die sich z.B. in der Größe unterscheiden. Beispielsweise kann ein Jungtierbereich für Kälber vorgesehen sein, die erst wenige Wochen alt sind. Für ältere Jungtiere , die z.B. etwa ein Jahr alt sind, kann ein separater Bereich vorgesehen sein. Vorzugsweise sind die Abmessungen eines Jungtierbereiches an die zu erwartende Größe der aufzunehmende Jungtiere angepasst. Vorzugsweise ist der Jungtierbereich im wesentlichen maßstabsgetreu zu dem Tierhaltebereich.

Bevorzugt ist insbesondere, dass wenigstens ein Jungtierbereich für Färsen, also für tragende Jungtiere geeignet ist. Ein für tragende Jungtiere geeigneter Jungtierbereich ist besonders vorteilhaft, da sich die tragenden Jungtiere dann an den späteren Rhythmus und die Abfolge im Tierhaltebereich für milchabgebende Tiere gewöhnen können.

Durch die höhere Akzeptanz ist ein häufigeres Aufsuchen des Systems, ein stressfreies Aufsuchen des Systems, ein regelmäßigeres Aufsuchen des Systems sowie ein zielgerichtetes Aufsuchen des Systems bei zu melkenden Tieren zu erwarten, wenn sie bereits als Jungtiere auf dieses System geprägt worden sind. Dies kann grundsätzlich zu höheren Leistungen nicht nur der milchgebenden Tiere, sondern auch der anderen Tiere führen, da weniger Störungen zu erwarten sind. Damit verbunden ist ein besseres Wohlbefinden, denn die Leistung ist ein Indikator für jenes. Insgesamt sind damit ethologisch aber auch ökonomisch bessere Leistungen zu erwarten. Hinzu kommt eine Verringerung der Arbeitsbelastung und eine eventuelle Erhöhung der Lebensqualität der Arbeitsperson, da die Tiere an ein solches System schon gewöhnt sind und weniger Störungen auftauchen.

Nach einer vorteilhaften Ausgestaltung des Verfahrens wird vorgeschlagen, dass die Jungtiere in einem Bereich konditioniert bzw. angelernt werden, der von dem seinem prinzipiellen Aufbau dem Melkbereich entspricht. Dies hat auch den Vorteil, dass beim Erreichen der Melkreife das Jungtier beim Aufsuchen des Melkbereichs eine ihm bekannte Situation erfährt. Dies ist insbesondere dann von Vorteil, wenn bei dem Jungtierbereich die Abrufstation, wie dies häufig der Fall ist, eine ungestörte Futteraufnahme nicht sicherstellt. Beispielsweise haben andere Jungtiere, die ebenfalls die Abrufstation aufsuchen wollen, bei einer offenen Gestaltung der Station die Möglichkeit das Jungtier, welches gerade in der Station steht, zu stören und eventuell sogar zu verdrängen. Hierdurch kann erhöhter Streß, eine geringere Futteraumahme, eine geringere Leistung und ein erhöhter Arbeitsaufwand für die Arbeitsperson bei der Jungtierhaltung entstehen.

Außerdem kann das Tier mit der Futterstation negative Eindrücke verbinden. Eine solche mögliche negative Prägung wird gemäß der vorteilhaften Weiterbildung vermieden, da der Bereich mit der Abrufstation wie ein Melkbereich ausbildet ist, der eine eindeutige Trennung der Jungtiere sicherstellt.

Insbesondere wenn die Jungtiere später mit einem automatischen Melksystem gemolken werden sollen, kann es vorteilhaft sein, wenn in dem Bereich mit der Abrufstation oder dergleichen eine Maschine oder eine Art von Roboter vorhanden ist, wie sie später auch beim Melken zum Einsatz kommt. Dabei muss nicht ein vollständig funktionsfähiger Roboter eingesetzt werden. Es kann auch eine (sogar funktionslose) Attrappe ausreichen. Denkbar ist auch der Einsatz einer Einrichtung, die das Euter des Jungtieres behandelt. Damit gewöhnt sich das Jungtier schon an den Kontakt der Maschine mit dem Euter.

Es kann auch eine maschinengesteuerte Vorreinigung, ein Ansetzen von Melkbechern (ohne zu Melken) an das Euter des Jungtieres und eine Nachbehandlung durch z.B. Dippen des Euters erfolgen, um das Jungtier prinzipiell an ein Melkverfahren zu gewöhnen.

Gemäß einer weiteren vorteilhaften Ausgestaltung des Verfahrens wird vorgeschlagen, dass die Jungtiere in dem Bereich gefüttert und/oder getränkt werden.

Vorzugsweise wird an das Jungtier in dem Bereich (der mit dem späteren Melkbereich im wesentlichen übereinstimmt) oder an der Abrufstation Kraft- oder Spezialfutter verfüttert. Derartiges Futter schmeckt den Tieren gut, so dass die Tiere einen Anreiz bekommen, diesen Bereich aufzusuchen. Als Kraftfutter eignen sich insbesondere Mehl, Getreide, Melasse und sonstige Spezialfutterarten, die als Ergänzung zum Grundfuttermittel dienen. Spezialfutter kann Eiweis, Vitamine, Mineralstoffe und sonstige Futterzusatzstoffe enthalten und besonders energiereich sein. Vorzugsweise wird für den Jungtierbereich und für den Tierhaltebereich der milchabgebenden Tiere ein ähnliches (oder sogar das identische) Kraftfutter verwendet. Es sind auch Abweichungen der verwendeten Kraftfutter möglich, beispielsweise um auf die unterschiedlichen Bedürfnisse der Tiere eingehen zu können.

In einem weiteren Fressbereich kann Futter an z.B. einem Trog zur Verfügung gestellt werden. Dort wird vorzugsweise ein beliebiges Grundfutter verfüttert. Das kann beispielsweise Heu oder Gras sein. Auch Silage und insbesondere Gras- oder Maissilage sind möglich.

Nach noch einer weiteren vorteilhaften Ausbildung des Verfahrens wird vorgeschlagen, dass die Jungtiere beim Betreten des Bereichs identifiziert werden. Tieridentifikation ist besonders dann vorteilhaft, wenn die Fütterung und/oder Tränkung individuell erfolgt. Dies ermöglicht die Überprüfung von Unregelmäßigkeiten und eine individuelle Betreuung der Tiere.

Vorzugsweise sind die einzelnen Bereiche in einer Art Kreislauf nacheinander angeordnet. Jungtiere werden so bei der Fütterung mit Tränke- oder Futterautomaten durch ihr Verlangen nach demselbigen in Stationen gelockt um dort jenes aufzunehmen. Die Aufstellung der Stationen kann im Anschluß an einen Fress- oder auch an einen Ruhebereich erfolgen.

Vorzugsweise erfolgt an wenigstens einer Stelle eine Zugangskontrolle zu dem nächsten Bereich.

In einer bevorzugten Weiterbildung wird wenigstens ein tierindividueller Parameter des Jungtieres in dem Bereich, der dem späteren Melkbereich entspricht, bestimmt. Das kann beispielsweise die Körpertemperatur, die Trink- oder die Fressmenge oder auch das Körpergewicht sein. Vorzugsweise werden erfasste Daten gespeichert und können zeitlich ausgewertet werden.

Gemäß einem weiteren erfinderischen Gedanken wird eine Vorrichtung zur Milchviehhaltung mit einem Tierhaltebereich für milchgebende Tiere zur Verfügung gestellt, wobei dieser Tierhaltebereich wenigstens einen Aufenthaltsbereich und mindestens einen Melkbereich umfasst und mit einem Jungtierbereich für Jungtiere, wobei der prinzipielle Aufbau des Jungtierbereichs im wesentlichen dem Aufbau des Tierhaltebereichs der milchgebenden Tiere entspricht.

Durch diese erfindungsgemäße Ausbildung der Vorrichtung wird mit konstruktiv einfachen Mitteln bei den Jungtieren eine Prägung auferlegt, die die Tiere bei einer Überführung in den Tierhaltebereich für milchgebende Tiere weiternutzen können. Die Jungtiere erlernen auf der Lernstrecke die spätere Abfolge.

Zweckmäßigerweise ist der Melkbereich in dem Jungtierbereich durch einen Konditionierbereich gebildet, so dass die Bereitschaft eines Jungtieres den Tierbereich aufzusuchen noch weiter gesteigert werden kann, was auch dazu führt, dass das Jungtier als melkreifes Tier bzw. als milchgebendes Tier den Melkbereich willig aufsucht.

Vorzugsweise weist der Konditionierbereich eine Fütter- und/oder Tränkeinrichtung auf, wodurch die Konditionierung des Tieres noch weiter gesteigert werden kann.

Gemäß einer noch weiteren vorteilhaften Weiterbildung der Vorrichtung wird vorgeschlagen, dass Tiererkennungsmittel vorgesehen sind, durch die ein Jungtier beim Betreten des Konditionierbereichs identifiziert werden kann. Dies hat den Vorteil, dass eine tierindividuelle Fütterung und/oder Tränkung des Jungtieres erfolgen kann. Des weiteren können die durch Auswertungen der Tiererkennungsmittel erzielten Daten Aussagen über die Häufigkeit des Aufsuchens des Bereichs durch ein Tier enthalten. Dies hat den Vorteil, dass Rückschlüsse auf das Verhalten bzw. Konditionierung und gegebenenfalls auf den Gesundheitszustand des Tieres geschlossen werden können. Aufgenommene Futtermengen oder die Gewichtsentwicklung des Tieres können ebenfalls berücksichtigt werden.

Vorzugsweise ist die Vorrichtung mit einer Steuereinrichtung ausgestattet, die mit der Fütter- und/oder der Tränkeinrichtung sowie mit den Tiererkennungsmitteln verbunden ist. Hierdurch kann entsprechend einem Steuerprogramm tierindividuelle Fütterung und Tränkung erreicht werden.

Vorzugsweise wird bei einem erfindungsgemäßen Verfahren eine Vorrichtung zur Milchviehhaltung verwendet. Die Vorrichtung umfasst einen Tierhaltebereich für milchgebende Tiere, welcher wenigstens einen Aufenthaltsbereich und wenigstens einen Melkbereich umfasst. Weiterhin werden Jungtiere in einem Jungtierbereich gehalten. Der Aufbau des Jungtierbereichs entspricht im wesentlichen dem Aufbau des Tierhaltebereichs der milchgebenden Tiere. Der Jungtierbereich umfasst wenigstens einen Aufenthaltsbereich und wenigstens einen Jungtierbehandlungsbereich. Der Jungtierbehandlungsbereich entspricht im Aufbau im wesentlichen dem Aufbau des Melkbereichs des Tierhaltebereichs für milchgebende Tiere. Die Funktion ist aber teilweise unterschiedlich, denn im Unterschied zum Melkbereich des Tierhaltebereichs für milchgebende Tiere werden die Jungtiere im Jungtierbehandlungsbereich nicht gemolken. Nach Erreichen der Melkreife werden die Jungtiere von dem Jungtierbereich in den Tierhaltebereich für milchgebende Tiere überführt.

In dem Jungtierbereich und auch in dem Tierhaltungsbereich kann weiterhin jeweils ein Separierungsbereich vorgesehen sein. Vorzugsweise findet eine Separierung in dem Melkbereich bzw. Jungtierbehandlungsbereich bzw. in direktem Anschluss daran statt. Vorteilhafterweise kann dazu in einer anschließenden gesonderten oder auch in einer integrierten Separationsvorrichtung das Tier in verschiedene Richtungen geleitet werden, um beispielsweise Tiere zu separieren, welche Unregelmäßigkeiten aurweisen, oder um Tiere zwecks anderer tierindividueller Betreuung auszusondern.

Diese Möglichkeit Jungtiere von der Gruppe zu trennen und in gesonderte Stallbereiche zu lassen kann rechnergestützt erfolgen. Eine schnelle Erkennung dieser Tiere durch die Arbeitspersonen wird dadurch ermöglicht, dass sich diese in einem gesonderten Bereich befinden, leicht ausgemacht werden können, da sie sich nicht mehr im Gruppenverband befinden. Ebenso ist eine tierindividuelle Betreuung schneller möglich, da die entsprechenden Tiere nicht in der Gruppe gesucht oder sogar eingefangen werden müssen.

Die Erfindung kann bei konventionellen Melkständen, bei automatischen Melksystemen und bei Karussellanlagen verwendet werden, um die Jungtiere an das jeweilige spätere System zu gewöhnen.

Weitere Vorteile und Einzelheiten der Erfindung werden anhand der bevorzugten Ausführungsbeispiele erläutert, ohne dass die Erfindung auf diese Ausführungsbeispiele beschränkt wird.

Es zeigen:
- Fig. 1: Schematisch eine Vorrichtung zur Milchviehhaltung,
- Fig. 2 bis 5: schematisch Ausführungsbeispiele des Konditionierbereichs,
- Fig. 6: schematisch ein zweites Ausführungsbeispiel einer Vorrichtung zur Milchtierhaltung und
- Fig. 7: ein drittes Ausführungsbeispiel einer Vorrichtung zur Milchviehhaltung.

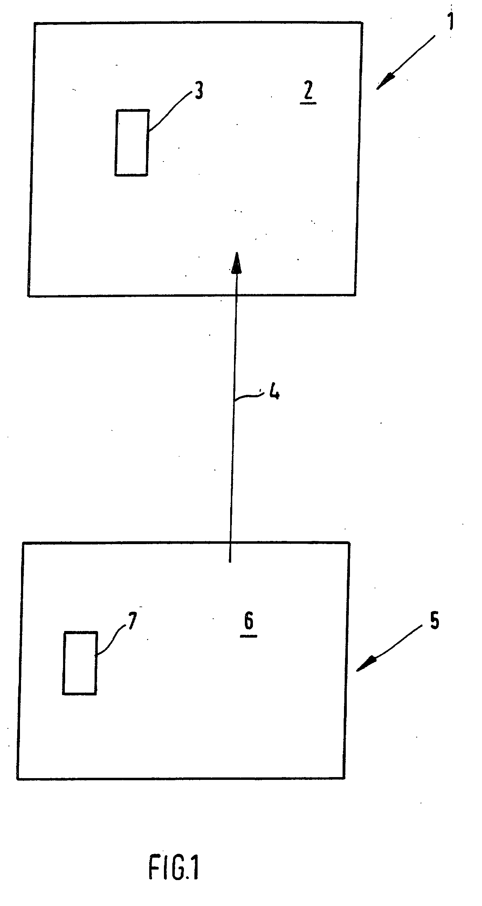

In der Fig. 1 is schematisch ein erstes Ausführungsbeispiel einer Vorrichtung zur Milchviehhaltung dargestellt. Die Vorrichtung umfasst einen Tierhaltebereich 1 für milchgebende Tiere. Dieser Tierhaltebereich weist einen Aufenthaltsbereich 2 auf. Innerhalb des Tierhaltebereichs 1 ist mindestens ein Melkbereich 3 vorgesehen. Der Melkbereich 3 kann mehrere Melkplätze umfassen.

Fig. 1 zeigt des weiteren einen Jungtierbereich 5 für Jungtiere auf. Der strukturelle Aufbau des Jungtierbereichs 5 entspricht im wesentlichen dem Aufbau des Tierhaltebereichs 1 der milchgebenden Tiere. Auch der Jungtierbereich 5 weist einen Aufenthaltsbereich 6 auf. Innerhalb des Jungtierbereichs 5 ist ein Konditionierbereich 7 vorgesehen. Der Aufbau des Konditionierbereiches 7 entspricht im wesentlichen dem des Melkbereiches 2. Die Funktion ist insofern unterschiedlich, als bei den Jungtieren kein Melkvorgang stattfindet.

Haben die Jungtiere Melkreife erreicht, so werden sie aus dem Jungtierbereich 5 in den Tierhaltebereich 1 überführt. Dieser Vorgang ist in der Fig. 1 durch den Pfeil 4 schematisch angedeutet.

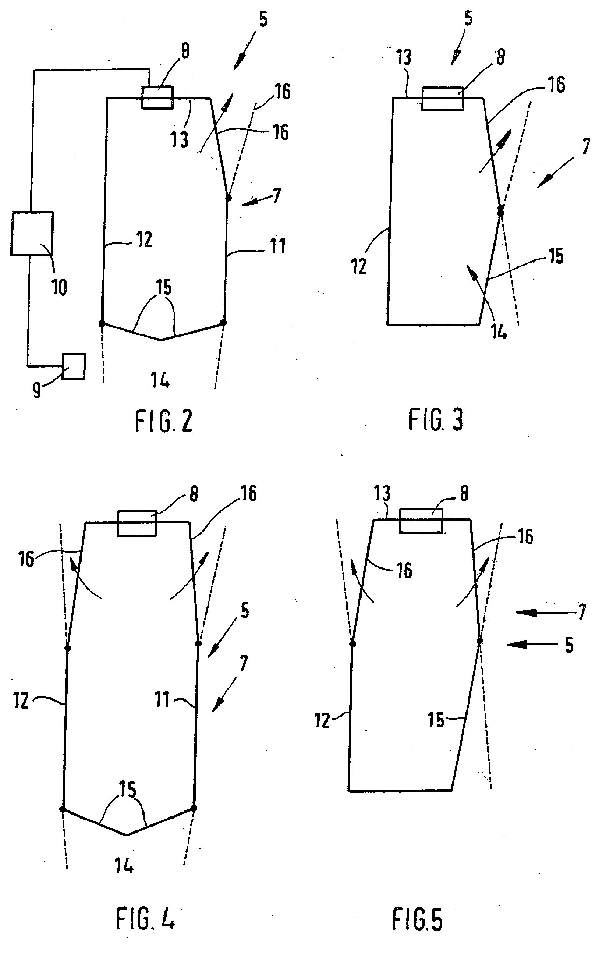

Die Fig. 2 bis 5 zeigen unterschiedliche Ausgestaltungen eines Konditionierbereichs 7. Der Konditionierbereich 7 ist hinsichtlich seines Aufbaus entsprechend einem Melkbereich 3 aufgebaut. In den dargestellten Ausführungsbeispielen nach den Fig. 2 bis 5 ist der Konditionierbereich 7 in Form von Boxen dargestellt. Abgesehen davon, dass kein Melken im Konditionierbereich 7 stattfindet, entspricht die Funktionsweise des Konditionierbereiches 7 der des Melkbereiches 3.

Der Konditionierbereich 7 weist einen Eingang 14 auf, der durch das Tor 15 geöffnet und verschlossen werden kann.

Zum Betreten des Konditionierbereichs 7 durch das Jungtier, welches nicht dargestellt ist, wird das Tor 15, welches zweiflügelig ausgebildet ist, geöffnet, so dass die Flügel des Tores 15 die gestrichelt dargestellte Position einnehmen.

Der Konditionierbereich 8 ist durch die zwei im wesentlichen parallel zueinander verlaufenden Längswände 11, 12 begrenzt. Dem Eingang 14 gegenüberliegend ist eine Stirnwand 13 vorgesehen. An der Stirnwand 13 ist eine Fütter- und/oder Tränkeinrichtung 8 angeordnet.

In dem dargestellten Ausführungsbeispiel ist die Längswand 11 zweiteilig ausgebildet. Die Längswand 11 weist einen beweglichen Abschnitt 16 auf, der in Form eines Tores ausgebildet ist. Zur Freigabe des Jungtieres aus dem Konditionierbereich 7 wird der Abschnitt 16 in die in Fig. 2 gestrichelt dargestellte Stellung verschwenkt. Verläßt das Tier den Konditionierbereich 7, so wird der Abschnitt 16 in seine Ausgangsposition zurückverschwenkt.

Im Bereich des Eingangs 14 sind, schematisch dargestellt, Tiererkennungsmittel 9 vorgesehen. Die Tiererkennungsmittel 9 sind mit einer Steuereinrichtung 10 verbunden. Die Steuereinrichtung 10 ist mit der Fütter- und/oder Tränkeinrichtung 8 verbunden, so dass in Abhängigkeit vom Tier individuelle Futterrationen gegeben werden können. Durch die Steuereinrichtung 10 kann auch eine nicht dargestellte Antriebseinheit für das Tor 15 bzw. für den Abschnitt 16 gesteuert werden.

Der Aufbau des Konditonierbereiches kann prinzipiell auch wie ein Tandemmelkstand, ein Side-by-side-Melkstand, ein Fischgrätenmelkstand, wie eine Durchtreibemelkbox oder wie ein sonstiger Melkstand gestaltet sein.

Fig. 3 zeigt eine zweite Ausführungsform eines Konditionierbereichs 7. Der Konditionierbereich 7 unterscheidet sich gegenüber der Ausführungsform des Konditionierbereichs 7 nach Fig. 2 dadurch, dass der Eingang an einer Längswand 11 ausgebildet ist. Diese weist ein Tor 15 auf, die um eine Achse verschwenkbar ist, so dass ein Jungtier in den Konditionierbereich 7 gelangen kann. Zur Freigabe des Konditionierbereichs 8 wird der Abschnitt 16 in die gestrichelt dargestellte Stellung nach Fig. 3 verschwenkt. An der Stirnwand 13 ist eine Fütter- und /oder Tränkeinrichtung 8 vorgesehen. Der in der Fig. 3 dargestellte Konditionierbereich 7 kann mit einer Steuereinrichtung und mit Tiererkennungsmitteln ausgestattet sein.

Fig. 4 zeigt ein drittes Ausführungsbeispiel einer Konditioniereinrichtung 7. Die Konditioniereinrichtung 7 weist an einer Stirnseite einen Eingang 14 auf. Der Eingang 14 wird durch ein zweiflügeliges Tor 15 freigegeben bzw. versperrt. Die beiden Längswände 11, 12 weisen jeweils einen verschwenkbaren Abschnitt 16 auf. Jeder Abschnitt 16 ist gesondert betätigbar, so dass in dem dargestellten Ausführungsbeispiel ein Jungtier den Konditionierbereich 7 entweder nach links oder nach rechts verlassen kann.

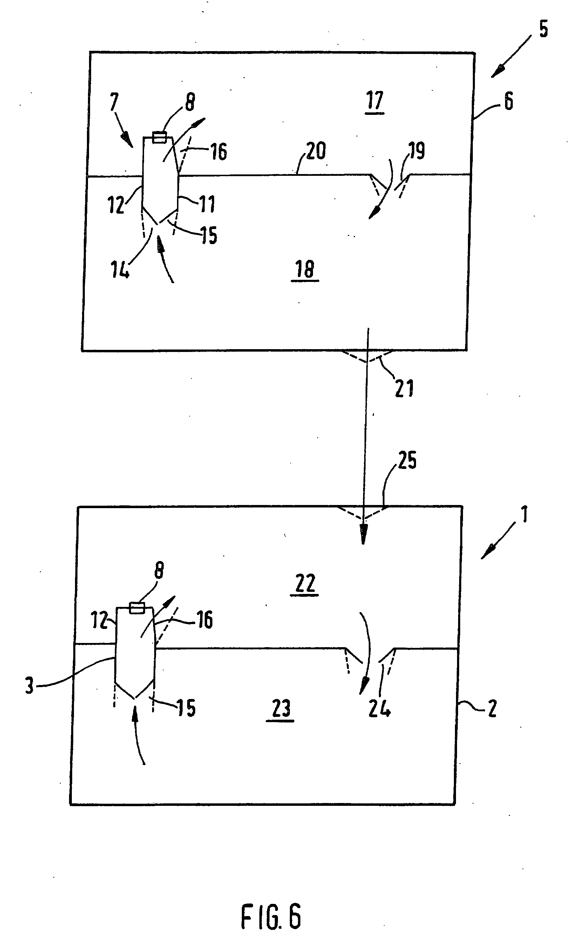

Fig. 5 zeigt ein noch weiteres Ausführungsbeispiel des Konditionierbereichs 7. Der prinzipielle Aufbau des Konditionierbereichs 7 nach Fig. 5 entspricht dem Aufbau des Konditionierbereichs 7 nach Fig. 3. Zusätzlich ist bei dem Konditionierbereich 7 nach Fig. 5 die Möglichkeit vorgesehen, dass das Tier den Konditionierbereich 7 entweder nach rechts oder nach links verlassen. Hierzu weist auch die Längswand 12 einen verschwenkbaren Abschnitt 16 auf.

In den Fig. 2 bis 5 sind die Wege, entlang derer ein Jungtier den Konditionierbereich 7 verlassen kann, durch Pfeile dargestellt.

Fig. 6 zeigt ein zweites Ausführungsbeispiel der erfindungsgemäßen Vorrichtung. Die Vorrichtung weist einen Jungtierbereich 5 auf, der einen Aufenthaltsbereich 6 umfasst. Der Aufenthaltsbereich 6 ist durch eine Trennung 20 in zwei Bereiche 17, 18 unterteilt. Bei den Bereichen 17, 18 kann es sich um einen Fressbereich, einen Ruhebereich oder desgleichen handeln. Wie in Fig. 6 ersichtlich, weist der Jungtierbereich 5 einen Konditionierbereich 7 auf. Die Ausgestaltung des Konditionierbereichs 7 entspricht der Ausbildung des Konditionierbereichs 7 nach Fig. 2. Andere Ausgestaltungen des Konditionierbereichs 7 sind möglich. Der Eingang des Konditionierbereichs 7 liegt in dem Bereich 18. Der Ausgang des Konditionierbereichs 7 liegt in dem Bereich 17. Durch das Betreten des Konditionierbereichs 7 wechselt ein Jungtier aus dem Bereich 18 in den Bereich 17. Die Bereiche 17, 18 sind durch einen Durchgang 19 miteinander verbunden, so dass ein Jungtier aus dem Bereich 17 über den Durchgang 19 in den Bereich 18 gelangen kann. Der Durchgang 19 kann so gestaltet sein, dass dieser einen Übertritt eines Jungtieres aus dem Bereich 17 in den Bereich 18 zuläßt, wenn das Jungtier bestimmte Bedingungen erfüllt. Hierbei kann es sich beispielsweise um eine Mindestaufenthaltszeit des Jungtieres in dem Bereich 17 handeln. In dem dargestellten Ausführungsbeispiel weist der Bereich 18 einen Ausgang 21, durch den ein Jungtier, welches melkreif ist, in den Tierhaltebereich 1 für zu melkende Tiere überführt werden kann. Hierzu weist der Aufenthaltsbereich 2 in seiner Außenbegrenzung einen Zugang 25 auf.

Die Ausgestaltung des Tierhaltebereichs 1 entspricht im wesentlichen der Ausgestaltung des Jungtierbereichs 5.

Der Tierhaltebereich 1 weist einen Melkbereich 3 auf, in dem die zu melkenden Tiere gemolken werden.

In dem dargestellten Ausführungsbeispiel ist der Tierhaltebereich 1 in zwei Bereiche 22, 23 unterteilt. Dies ist auch bei dem Jungtierbereich 5 der Fall. Dies ist nicht zwingend notwendig. Sowohl der Tierhaltebereich 1 als auch der Jungtierbereich 5 können in mehrere Bereiche unterteilt werden, wobei die Tiere alle Bereiche nacheinander durchschreiten oder einzelne auserwählte Bereiche aufsuchen können.

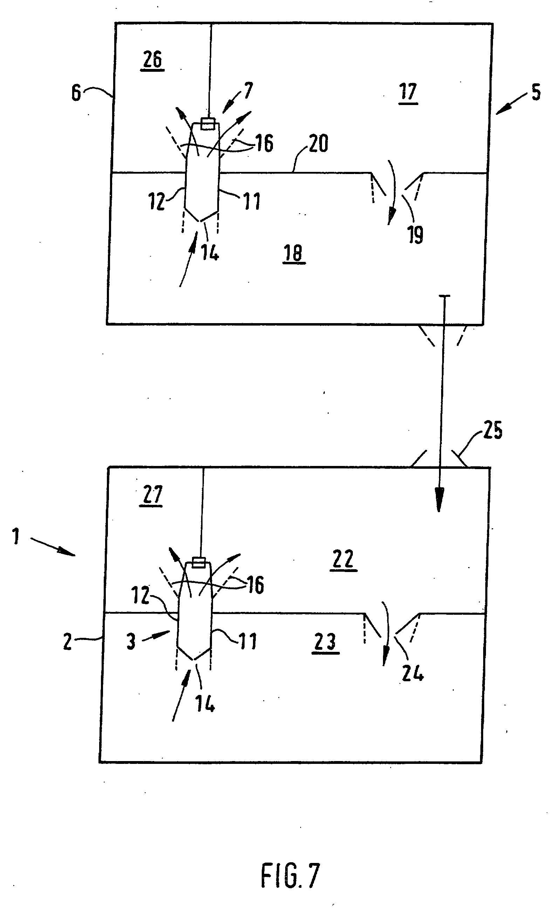

Fig. 7 zeigt ein Ausführungsbeispiel einer erfindungsgemäßen Vorrichtung, bei der der Tierhaltebereich 1 in drei Bereiche 20, 23 und 27 unterteilt ist. Der Melkbereich 3 ist so angeordnet, dass ein zu melkendes Tier aus dem Bereich 23 in den Melkbereich 3 gelangt. Das Tier verlässt den Melkbereich 3 entweder in den Bereich 22 oder in den Bereich 27. Bei dem Bereich 27 kann es sich beispielsweise um einen Separationsbereich handeln, in den auszusondernde Tiere geleitet werden. Der Bereich 27 kann über Durchgänge (nicht dargestellt) mit dem Bereich 22 oder mit dem Bereich 23 verbunden sein.

Der Jungtierbereich 5 ist in einer entsprechenden Weise wie der Tierhaltebereich 1 aufgebaut. Der Jungtierbereich 5 weist einen Aufenthaltsbereich 6 auf, der in drei Bereiche 17, 18 und 26 unterteilt ist. Der Konditionierbereich 7 ist so angeordnet, dass ein Jungtier aus dem Bereich 18 in den Konditionierbereich 7 gelangt. Dieses wird entweder in Bereich 17 oder in den Bereich 26 geleitet. Die Bereiche 17, 18 können mit dem Bereich 26 verbunden sein.

Durch die erfindungsgemäße Vorrichtung und das erfindungsgemäße Verfahren wird die Möglichkeit geschaffen, Jungtiere derart zu konditionieren, dass diese, wenn sie die Melkreife erreicht haben, eine Prägung aurweisen, durch die die Handhabung des Tieres erleichtert und eine höhere Leistungsfähigkeit erzielt wird. Die Vorrichtung kann entsprechende Mittel zur Tiererkennung aufweisen.

Vorzugsweise erfolgt die Steuerung der Vorrichtung mittels einer Datenverarbeitungsanlage.

Bei den Ausführungsbeispielen nach Fig. 6 oder 7 können z.B. die Bereich 17 und 22 jeweils einen Futtertrog oder dergleichen aufweisen, der z.B. längs einer Begrenzung vorgesehen ist, um mehreren Tieren gleichzeitig das Fressen zu ermöglichen. In dem Futtertrog kann Grundfutter für die Tiere vorgesehen sein. Nach dem Fressen können die Tiere durch das Einwegtor 19 bzw. 24 in den Liegebereich 18 bzw. 23 gelangen, in dem Liegeboxen vorgesehen sein können, um den Tieren ein bequemes Liegen zu ermöglichen.

Wenn der Tierhaltebereich 1 z.B. für eine Anzahl von 40 Tieren vorgesehen ist, dann kann der Jungtierbereich 5 für eine Anzahl von ebenfalls 40 Jungtieren vorgesehen sein. Der Jungtierbereich kann aber auch für eine geringere Anzahl an Tieren vorgesehen sein, wie beispielsweise 10. Die Anzahl der Tiere für den Tierhaltebereich 1 und den Jungtierbereich 5 kann aber auch kleiner oder erheblich größer sein.

In Melkständen oder im Stallbereich an sich sind oft Selektionstore vorgesehen. Solche Durchgangseinrichtungen können nicht nur bei der erfindungsgemäßen Vorrichtung oder bei dem erfindungsgemäßen Verfahren vorgesehen sein, sondern auch in sonstigen Stallbereichen oder Melkständen.

Derartige Tore können als Einwegtore ausgebildet sein, die nur in eine Richtung einen Durchgang eines oder mehrerer Tiere erlauben. Das Öffnen oder Schließen der Tore kann gesteuert erfolgen. Es kann auch eine Tieridentifikationseinrichtung an dem Tor oder in der Nähe vorgesehen sein, um ein Tier zu identifizieren. Das Tor kann derart gesteuert werden, dass es den Durchgang nur freigibt, wenn das Tier zum Durchgang berechtigt ist. Das wird beispielsweise zur Tiersortierung (für verschiedene Futtergruppen, zum Aussortieren kranker Tiere, bei automatischen und halbautomatischen sowie konventionellen Melksystemen) eingesetzt.

Möglich sind auch Tore, die sich selbsttätig öffnen. Üblich sind Tore, die vom Tier geöffnet werden müssen. Bei diesen bekannten Toren muss das Tier zunächst testen, ob das Tor sich öffnen lässt, um dann anschließend das Tor, eventuell aktiv, zu öffnen. Ein Tier testet meist mit dem Kopf, dem Nacken oder der Brust, ob ein Tor den Weg freigibt. Das ist aufwendig und kann die Tiere unsicher machen, da es erst bei Nichtgelingen feststellt, dass das Tor sich nicht Öffnen lässt.

Um das zu vermeiden, können auch Durchgangseinrichtungen wie z.B. Tore eingesetzt werden, bei denen ein Signal die Durchgangsberechtigung anzeigt. Das kann beispielsweise ein für das Tier wahrnehmbares akustisches, optisches, riechbares oder fühlbares oder ein sonstiges für das Tier wahrnehmbares Signal sein. Die Anmelderin behält sich vor, einen separaten Schutz auf eine derartige Durchgangseinrichtung zu beantragen.

Ein solches Signal kann ausgegeben werden, sobald das System bzw. Tor erkannt hat, dass sich ein Tier der Durchgangseinrichtung nähert, um so dem Tier die Durchgangsberechtigung zu signalisieren. Es ist auch möglich, dass anstatt dessen oder zusätzlich ein anderes Signal ausgegeben wird, wenn keine Berechtigung vorliegt. Das Tier gewöhnt sich an ein derartiges Signal oder an mehrere derartiger Signale, ist weniger irritiert wenn sich ein Tor mal nicht öffnet und wird den Tierverkehr weniger behindern, als dies bei konventionellen Toren der Fall ist.

### Bezugszeichenliste

- 1: Tierhaltebereich
- 2: Aufenthaltsbereich
- 3: Melkbereich
- 4: Pfeil
- 5: Jungtierbereich
- 6: Aufenthaltsbereich
- 7: Konditionierbereich
- 8: Fütter- und/oder Tränkeinrichtung
- 9: Tiererkennungsmittel
- 10: Steuerungseinrichtung
- 11: Längswand
- 12: Längswand
- 13: Stirnwand
- 14: Eingang
- 15: Tor
- 16: Abschnitt
- 17: Bereich
- 18: Bereich
- 19: Durchgang
- 20: Trennung
- 21: Ausgang
- 22: Bereich
- 23: Bereich
- 24: Durchgang
- 25: Zugang
- 26: Bereich
- 27: Bereich

## Patentansprüche

1. Verfahren zur Milchviehhaltung bei dem
milchgebende Tiere in einem Tierhaltebereich (1) mit wenigstens einem Aufenthaltsbereich (2) und mit mindestens einem Melkbereich (3) gehalten werden,
Jungtiere in einem Jungtierbereich (5) gehalten werden, wobei der strukturelle Aufbau des Jungtierbereichs (5) im wesentlichen dem Aufbau des Tierhaltebereichs (1) der milchgebenden Tiere entspricht, und
die Jungtiere nach erreichen der Melkreife in den Tierhaltebereich (1) für milchgebende Tiere überführt werden.

2. Verfahren nach Anspruch 1, bei dem in dem die Jungtiere in einem dem Melkbereich entsprechendem Bereich (7) konditioniert werden.

3. Verfahren nach Anspruch 2, bei dem die Jungtiere in dem Bereich (7) gefüttert und/oder getränkt werden.

4. Verfahren nach Anspruch 2 oder 3, bei dem die Jungtiere beim Betreten des Bereichs (7) identifiziert werden.

5. Verfahren nach Anspruch 3 oder 4, bei dem die Fütterung und/oder Tränkung tierindividuell erfolgt.

6. Vorrichtung zur Milchviehhaltung mit
einem Tierhaltebereich (1) für milchgebende Tiere, wobei dieser Tierbereich (1) wenigstens einen Aufenthaltsbereich (2) und mindestens einen Melkbereich (3) umfasst, und mit
einem Jungtierbereich (5) für Jungtiere, wobei der strukturelle Aufbau des Jungtierbereichs (5) im wesentlichen dem Aufbau des Tierhaltebereichs (1) der milchgebenden Tiere entspricht.

7. Vorrichtung nach Anspruch 6, **dadurch gekennzeichnet, dass** der Melkbereich in dem Jungtierbereich (5) durch einen Konditionierbereich (7) gebildet ist.

8. Vorrichtung nach Anspruch 7, **dadurch gekennzeichnet, dass** der Konditionierbereich (7) eine Fütter- und/oder eine Tränkeinrichtung (8) aufweist.

9. Vorrichtung nach Anspruch 8, **dadurch gekennzeichnet, dass** Tiererkennungsmittel (9) vorgesehen sind, durch die ein Jungtier beim Betreten des Konditionierbereichs (7) identifiziert werden kann.

10. Vorrichtung nach Anspruch 8 oder 9, **dadurch gekennzeichnet, dass** eine Steuereinrichtung (10) vorgesehen ist die mit der Fütter- und/oder der Tränkeinrichtung (8) sowie mit den Tiererkennungsmitteln (9) verbunden ist.
